# EUROPÄISCHE PATENTANMELDUNG

(11) **EP 0 747 110 A1**
(43) Veröffentlichungstag der Anmeldung: **11.12.1996**
(21) Anmeldenummer: 96108384.7
(22) Anmeldetag: 25.05.1996
(51) Int. Cl.: B01D 53/94, B01D 53/04, F02M 21/00, F02B 43/00

(54) **Verfahren zur katalytischen Reinigung der Abgase von Gasmotoren**

(30) Priorität: 10.06.1995 DE 19521237
(71) Anmelder: DEGUSSA AG, 60311 Frankfurt (DE)
(72) Erfinder: Laubenstein, Stephan, 60433 Frankfurt (DE); Müller, Herbert, Dr., 63755 Alzenau- Michelbach (DE)

(57) **Zusammenfassung**

Die Erfindung betrifft ein Verfahren zur katalytischen Reinigung der Abgase von Gasmotoren, welche mit Deponie- oder Klärgasen betrieben werden. Die in den Deponie- und Klärgasen enthaltenen Katalysatorgifte werden durch einen vor den Motor geschalteten Adsorber entfernt.

## Beschreibung

Die vorliegende Erfindung betrifft ein Verfahren zur katalytischen Reinigung der Abgase von Gasmotoren, welche mit Brenngasen betrieben werden, die Katalysatorgifte enthalten, durch Leiten der Abgase über einen Abgasreinigungskatalysator.

Gasmotoren werden in zunehmendem Maße eingesetzt, um das aus Deponien austretende Deponiegas energetisch zu nutzen. Das heute noch häufig praktizierte Abfackeln der austretenden Deponiegase wird in Zukunft wegen der ständig steigenden Umweltauflagen kaum noch durchführbar sein. Die von den Gasmotoren emittierten Abgase beinhalten jedoch Schadstoffe, die genauso wie bei Kraftfahrzeugabgasen mittels Katalysatoren gereinigt werden müssen. Hierzu werden heute schon Oxidationskatalysatoren und Dreiweg-Katalysatoren wie sie auch in der Automobilindustrie gebräuchlich sind eingesetzt.

Ein entscheidendes Problem bei der katalytischen Reinigung der Abgase von Gasmotoren, die mit Deponiegas betrieben werden, ist jedoch die Tatsache, daß die Deponiegase erhebliche Mengen an flüchtigen Verbindungen von Katalysatorgiften enthalten. Es handelt sich dabei um Verbindungen von Phosphor-, Schwefel-, Arsen-, Blei-, Quecksilber- und Siliziumorganische Verbindungen. Diese Komponenten sind auch noch im Abgas der Gasmotoren enthalten und schädigen die katalytische Wirkung der nachgeschalteten Abgaskatalysatoren. Dies führt zu einer erheblich verminderten Standzeit der Katalysatoren hinter solchen Gasmotoren. Während die Standzeiten von Katalysatoren hinter Gasmotoren, welche mit Erdgas betrieben werden, mehr als 16 000 Stunden betragen, sinkt diese Standzeit bei Gasmotoren, welche mit Deponie- oder Klärgas betrieben werden, unter eine Standzeit von 2 000 Stunden. Eine so verringerte Standzeit ist wirtschaftlich nicht mehr akzeptabel.

Aus der DE 43 26 121 A1 ist ein Verfahren zum Schutz von Katalysatoren für die Reinigung der Abgase von Verbrennungskraftmaschinen vor Katalysatorgiften bekannt, bei welchem die Katalysatorgifte durch Adsorption an einem Adsorber, der zwischen Motorausgang und Katalysatoreingang in den Abgasstrang eingeschaltet ist, herausgefiltert werden. Als Adsorber wird ein hochtemperaturbeständiger Zeolith oder ein Gemisch verschiedener hochtemperaturbeständiger Zeolithe eingesetzt.

Aufgabe der vorliegenden Erfindung ist es, ein vereinfachtes Verfahren anzugeben, mit welchem die Abgase von Gasmotoren, welche mit Deponie- oder Klärgas betrieben werden, ohne wesentliche Vergiftung des Katalysators katalytisch gereinigt werden können.

Diese Aufgabe wird dadurch gelöst, daß die Katalysatorgifte aus dem Brenngas vor dem Eintritt in den Motor mittels eines Adsorbers entfernt werden. Entgegen dem aus der DE 43 26 121 A1 bekannten Verfahren wird der Adsorber hier nicht in den heißen Abgasstrang zwischen Motor und Katalysator eingeschaltet, sondern vor den Gasmotor. Diese Anordnung des Adsorbers ermöglicht aus verschiedenen Gründen eine sehr effektive Entfernung der Katalysatorgifte aus dem Brenngas. Zum einen ist das Brenngas vor dem Gasmotor noch kalt, so daß der Adsorber seine Adsorptionsfähigkeit noch voll entfalten kann. Weiterhin ist der Volumenstrom des Brenngases vor dem Gasmotor geringer als der Volumenstrom des Abgases, wodurch die Giftkonzentrationen im Brenngas höher sind als im Abgas. Zusammen mit der geringeren Raumgeschwindigkeit führt dies zu einer besseren Adsorption der Katalysatorgifte am Adsorber.

Die niedrige Temperatur der Brenngase führt auch zu einer größeren Anzahl von möglichen Adsorbermaterialien für diese Anwendung. Geeignete Adsorbermaterialien sind Zeolithe, Aktivkohle und γ-Aluminiumoxid. Die Adsorber können als Pellets in Form einer Adsorberschüttung eingesetzt werden, oder auf monolithischen Trägern in Form von Adsorberbeschichtungen verwendet werden. Die Adsorptionsleistung der Adsorber für bestimmte Schadstoffe kann erhöht werden durch entsprechende Vorbelegung mit Schwefelverbindungen oder Alkalihydroxiden.

Mit dem erfindungsgemäßen Verfahren ist eine sehr effektive Entfernung der Katalysatorgifte aus dem Brenngas möglich. Dadurch wird die Standzeit der hinter dem Gasmotor in den Abgastrakt eingeschalteten Katalysatoren wesentlich verlängert. Als Katalysatoren können hier alle aus dem Stand der Technik bekannten Abgaskatalysatoren für Stationärmotoren und Kraftfahrzeugmotoren eingesetzt werden. Wegen der effektiven Entfernung der Katalysatorgifte aus dem Brenngas können hier auch Katalysatoren zum Einsatz kommen, die zwar empfindlicher gegenüber Katalysatorgiften sind, jedoch eine wesentlich höhere Aktivität für die Entfernung der restlichen Schadstoffe aufweisen.

## Patentansprüche

1. Verfahren zur katalytischen Reinigung der Abgase von Gasmotoren, welche mit Brenngasen betrieben werden, die Katalysatorgifte enthalten, durch Leiten der Abgase über einen Abgasreinigungskatalysator
**dadurch gekennzeichnet**,
daß die Katalysatorgifte aus dem Brenngas vor Eintritt in den Motor mittels eines Adsorbers entfernt werden.
